# EUROPEAN PATENT SPECIFICATION

(11) **EP 3 812 874 B1**
(45) Date of publication and mention of the grant of the patent: **15.05.2024**
(21) Application number: 19204685.2
(22) Date of filing: 22.10.2019
(51) Int. Cl.: G06F 1/04, G06F 1/08, G06F 11/07

(54) **GLITCH-FREE CLOCK MULTIPLEXER**
STÖRUNGSFREIER TAKTMULTIPLEXER
MULTIPLEXEUR D'HORLOGE SANS VARIATIONS ANORMALES

(43) Date of publication of application: 28.04.2021
(73) Proprietor: IHP GmbH - Innovations for High Performance Microelectronics / Leibniz-Institut für innovative Mikroelektronik, 15236 Frankfurt (Oder) (DE)
(72) Inventor: Zeidler, Steffen, 15236 Frankfurt (Oder) (DE); Breitenreiter, Anselm, 15236 Frankfurt (Oder) (DE); Schrape, Oliver, 15236 Frankfurt (Oder) (DE); Krstic, Milos, 15236 Frankfurt (Oder) (DE)
(74) Representative: Eisenführ Speiser

(56) References cited:
- US-A1- 2012 169 373
- US-A1- 2016 299 806
- US-B1- 9 612 611

## Description

The invention regards a glitch-free clock multiplexer, an integrated circuit (IC) including the glitch-free clock multiplexer, and a method for providing an output clock signal selected from two clock signals. In particular, the invention regards a glitch-free clock multiplexer for pausable clocks, an IC including the glitch-free clock multiplexer for pausable clocks, and a method for glitch-free clock switching from a non-toggling clock signal to another clock signal.

ICs, such as systems on a chip (SoC) and application specific integrated circuits (ASICs) can include a number of components. The components may be operated at different clock rates and their clock rates may be switched during operation of a SoC or an ASIC based on a state of the SoC or ASIC. The clock rates can be provided to the components by different clocks. In order to switch between the different clock rates, a clock multiplexer can be used that switches between different clock signals provided by the different clocks. When switching between clock signals, there is a risk, that a glitch occurs, i.e., a transition that occurs before the signal settles to its intended value resulting in an undefined state. Such a glitch may cause a malfunction of the circuit, especially when occurring at clock distribution networks.

Multiplexers that try to avoid glitches are known from the prior art. For example, US 5,357,146, US 2018/0145689 A1, US 9,612,611 B1, US 2012/0169373 and US 6,265,930 B1 present different embodiments of multiplexers that try to avoid glitches when switching between clock signals.

It is an object of the invention to provide an improved glitch-free clock multiplexer.

This object is achieved by a glitch-free clock multiplexer for providing an output clock signal selected from a first clock signal and a second clock signal. The glitch-free clock multiplexer comprises a multiplexer unit. The multiplexer unit is configured for disabling a current output clock signal before enabling a next output clock signal based on a control signal and the clock signals, such that only one of the clock signals is enabled to be selected as output clock signal at a time. The glitch-free clock multiplexer is configured for selecting the clock signal which is enabled as the output clock signal, such that switching between the clock signals is performed with a latency which is at least as long as a smallest period of both of the clock signals in order to avoid glitches. The multiplexer unit is furthermore configured for disabling the first clock signal and for enabling the second clock signal based on a first reset signal provided based on the control signal and the first clock signal not toggling. The multiplexer unit is furthermore configured for disabling the second clock signal and for enabling the first clock signal based on a second reset signal provided based on the control signal and the second clock signal not toggling.

This allows selecting an output clock signal from two clock signals even if the clock of which the current output clock signal is originating is inactive and not toggling. A clock which is toggling is defined as active and a clock which is not toggling is defined as inactive. The glitch-free clock multiplexer allows switching between clock signals using pausable clocks that do not need to run permanently, i.e., clocks that can be paused. A clock that is paused is inactive. Furthermore, if a clock is not running due to a malfunction switching to another clock is still possible using the glitch-free clock multiplexer. Since the reset signals are based on the clock signals and the control signal, no external reference clock signal is required. This reduces cost and a risk that switching is not possible due to malfunction of a reference clock providing the external reference clock signal. Since the current output clock signal is disabled before the next output clock signal is enabled, it is ensured that clock signals are not enabled at the same time. This allows to ensure that the output clock signal is not a combination of the two clock signals and corresponds to one of the two clock signals at all the time.

A clock signal is a signal that oscillates between a lower state and a higher state, preferably with a fixed and constant frequency. The clock signal can for example be a square wave with a 50 % duty cycle. The current output clock signal can be the first clock signal or the second clock signal. The next output clock signal can be the second clock signal or the first clock signal. If the current output clock signal is the first clock signal, the next output clock signal is the second clock signal and vice versa. This allows switching between the current output clock signal and the next output clock signal and thus selecting the first clock signal or the second clock signal as output clock signal for providing it.

A period of the clock signal corresponds to the amount of time required for completing a full cycle of the clock signal pattern. The smallest period of both the clock signals corresponds to the period of the clock signals that is the smaller one, i.e., the period of the clock signal with higher frequency.

The glitch-free clock multiplexer can comprise one or more of:
- a control signal input for receiving the control signal,
- a first clock signal input for receiving the first clock signal,
- a second clock signal input for receiving the second clock signal,
- a first reset signal input for receiving the first reset signal and for disabling the first clock signal, and
- a second reset signal input for receiving the second reset signal and for disabling the second clock signal.

The control signal input can be a select signal input. The control signal can be a select signal which causes the multiplexer unit for enabling one of the clock signals to be selected as output clock signal. This allows selecting one of the two clock signals as output clock signal based on the select signal.

The glitch-free clock multiplexer comprises an output clock signal output for providing the output clock signal. The output clock signal can for example be provided to an IC for operating one or more components of the IC. Since the glitch-free clock multiplexer has inputs for the clock signals, reset signals, and the control signal and an output for the output clock signal, the glitch-free clock multiplexer can be integrated in an IC and can be provided with signals from the IC.

The multiplexer unit comprises a first synchronizer for enabling the first clock signal and a second synchronizer for enabling the second clock signal. The synchronizers are configured for enabling one of the clock signals with a latency which is at least as long as a smallest period of both of the clock signals. The synchronizers are connected with each other via feedback lines such that enabling one of the clock signals is only possible after the other one of the clock signals is disabled. The synchronizers allow delaying the switching of the clock signals such that the output clock signal has no glitches when the control signal causes the glitch-free clock multiplexer to switch between the clock signals. This allows the switching to not be performed at the moment that the control signal initiates the switching as this may be a moment at some time of a cycle of the current output clock signal. Instead, the cycle of the current output clock signal can be finished before the glitch-free clock multiplexer switches to the next output clock signal. Furthermore, meta-stability can be reduced.

The glitch-free clock multiplexer can comprise AND-logics and one or more OR-logics. The glitch-free clock multiplexer can be configured for switching between the current output clock signal and the next output clock signal based on AND-OR logic. Using AND-OR logic allows providing a simple and cost efficient glitch-free clock multiplexer.

The enable clock signals can be used for enabling the switching to the respective clock signal. For example, a clock signal and its respective enable clock signal can be provided to an AND-logic which can process the signals by providing an enabled clock signal that enables the clock signal to be selected as output clock signal. The enabled clock signal can be provided to an OR-logic for providing the output clock signal based on enabled clock signals provided to the OR-logic. This improves glitch-free switching between the clock signals. Using enable clock signals and AND-OR logic allows for providing a simple multiplexer based on separate enable signals.

Each of the synchronizers can comprise one or more flip-flops, e.g., two flip-flops or a series of flip-flops. The flip-flops can for example include edge triggered flip-flops, such as positive or negative edge triggered D flip-flops. The first and the second clock signals can be synchronous clock signals. In this case, the clock signals are multiples to each other. The first and the second clock signals can also be asynchronous clock signals. In this case, the clock signals are not related to each other. In case that the clock signals are related, the synchronizer can comprise only one flip-flop or a series of flip-flops, such as two flip-flops. In case that the clock signals are unrelated, each of the synchronizers preferably comprises a series of flip-flops, such as two or more flip-flops arranged in series. Increasing the number of flip-flops in series can increases the latency generated by the synchronizers. This allows to improve delaying by the synchronizers acting as delay lines for delaying the switching between the clock signals.

The glitch-free clock multiplexer is configured for providing the first reset signal to the first synchronizer and the second reset signal to the second synchronizer. The reset signals can cause the first synchronizer to be reset when the first clock signal is not toggling and can cause the second synchronizer to be reset when the second clock signal is not toggling, such that the current output clock signal can be disabled and the next output clock signal can be enabled, even when the current output clock signal is not toggling. Resetting a synchronizer corresponds to setting the synchronizer to an initial state in which all register values are zero. This allows to avoid not being able to switch from an inactive clock to an active clock. The respective reset signal can be generated with a latency after the respective clock signal stopped toggling. The latency can for example be at least as long as a smallest period of the other clock signal that is toggling.

The multiplexer unit can additionally comprise a first AND-logic and a second AND-logic. The first AND-logic can be configured for providing a first AND-logic output signal based on the control signal and an inverted enable second clock signal. The second AND-logic can be configured for providing a second AND-logic output signal based on an inverted enable first clock signal and an inverted control signal generated by inverting the control signal. The first synchronizer can be configured for providing the enable first clock signal based on the first AND-logic output signal, the first clock signal and the first reset signal. The first synchronizer can also be configured to be reset based on the first reset signal. The second synchronizer can be configured for providing the enable second clock signal based on the second AND-logic output signal, the second clock signal, and the second reset signal. The second synchronizer can also be configured to be reset based on the second reset signal.

The first synchronizer and the second synchronizer can be connected via feedback lines. The feedback lines can connect the output of the first synchronizer with the input of the second AND-logic and the output of the second synchronizer with the input of the first AND-logic. The output of the first AND-logic can be connected to the first synchronizer and the output of the second AND-logic can be connected to the second synchronizer, such that the synchronizers receive feedback from each other via the feedback lines and such that enabling of the first clock signal is only possible when the second clock signal is disabled and vice versa. Since the synchronizers can be reset by the respective reset signals, resetting the synchronizer of the current output clock signal is possible even when the current output clock signal is not toggling. This allows disabling the current output clock signal and enabling the next output clock signal even when the current output clock signal is not toggling.

The multiplexer unit can comprise a third AND-logic, a fourth AND-logic, and an OR-logic. The third AND-logic can be configured for providing a third AND-logic output signal based on the first clock signal and the enable first clock signal. The fourth AND-logic can be configured for providing a fourth AND-logic output signal based on the second clock signal and the enable second clock signal. The OR-logic can be configured for providing the output clock signal based on the third AND-logic output signal and the fourth AND-logic output signal. This allows for providing a glitch-free clock multiplexer with a simple selection mechanism for selecting an enabled clock signal.

At least one of the synchronizers can comprise a negative edge triggered D flip-flop and a positive edge triggered D flip-flop. Edge triggered inputs of the edge triggered D flip-flops can be configured for receiving a respective clock signal. The edge triggered D flip-flops can be arranged in series such that an output signal of one of the edge triggered D flip-flops is provided to a data input of the other edge triggered D flip-flop. The edge triggered D flip-flops can be configured for being reset based on a respective reset signal. A data input of the edge triggered D flip-flop that is first in the series of edge triggered D flip-flops can be configured for receiving a respective AND-logic output signal. This allows providing a cost efficient and simple glitch-free clock multiplexer.

If both synchronizers comprise a negative edge triggered D flip-flop and a positive edge triggered D flip-flop, the edge triggered input of the edge triggered D flip-flops of the first synchronizer can be configured for receiving the first clock signal and the edge triggered input of the edge triggered D flip-flops of the second synchronizer can be configured for receiving the second clock signal. Additionally, the edge triggered D flip-flops of the first synchronizer can be configured for being reset based on the first reset signal and the edge triggered D flip-flops of the second synchronizer can be configured for being reset based on the second reset signal. Additionally, the data input of the edge triggered D flip-flop of the first synchronizer that is first in the series of edge triggered D flip-flops can be configured for receiving the first AND-logic output signal and the data input of the edge triggered D flip-flop of the second synchronizer that is first in the series of edge triggered D flip-flops can be configured for receiving the second AND-logic output signal.

The glitch-free clock multiplexer can comprise a first reset unit and a second reset unit. The first reset unit can be configured for providing the first reset signal based on the control signal and the clock signals. The second reset unit can be configured for providing the second reset signal based on the control signal and the clock signals. The reset units can provide the reset signals such that a respective clock signal can be disabled when the respective clock signal is not toggling. This allows switching between the clock signals even when the current output clock signal is not toggling.

The first reset unit can be configured for monitoring a toggling of the first clock signal. The second reset unit can be configured for monitoring a toggling of the second clock signal. The first reset unit can be configured for providing the first reset signal for disabling the first clock signal and for enabling the second clock signal when the first clock signal is not toggling and the second clock signal is selected. The second reset unit can be configured for providing the second reset signal for disabling the second clock signal and for enabling the first clock signal when the second clock signal is not toggling and the first clock signal is selected.

Each of the reset units can be configured for marking its monitored clock signal as inactive when the monitored clock signal is not toggling. Each of the reset units can be connected to a synchronizer of the multiplexer unit and configured for resetting the synchronizer based on the reset signal. Resetting the synchronizer corresponds to setting the synchronizer to its initial state, i.e., all register values of the synchronizer are set to zero. In this case the output of the synchronizer is zero. Since the output of the synchronizers can be an enable clock signal, the respective clock signal can be disabled and the other clock signal can be enabled when the synchronizer is reset.

Each of the reset units can comprise or be a timer. The timer can be configured to be reset based on the clock signal that the reset unit monitors. The timer can be configured for resetting the synchronizer of the clock signal that the reset unit monitors when the clock signal that the reset unit monitors stops toggling and with a latency depending on a period of the other clock signal.

The timer can include a series of edge triggered D flip-flops. The timer can be configured such that a data input of a first edge triggered D flip-flop in the series is provided with a data signal based on the control signal. The edge triggered D flip-flops can be arranged such that an output signal of a previous edge triggered D flip-flop is provided to a data input of a subsequent edge triggered D flip-flop of the series of edge triggered D flip-flops. The timer can be configured such that reset inputs of the edge triggered D flip-flops are provided with the clock signal that the reset unit monitors, such that the reset unit is regularly reset while the clock signal is toggling. The timer can be configured such that edge triggered inputs of the edge triggered D flip-flops are provided with the other clock signal. Resetting the reset unit corresponds to setting the reset unit to an initial state in which all register values of the edge triggered flip-flops are zero. Since the reset units are regularly reset by the clock signals provided to the reset inputs of the reset units as long as the clock signal monitored by the reset unit is toggling, the reset units do not influence the switching between the clock signals when the clock signals are toggling. In case that the clock signal monitored by the reset unit stops toggling, the register values of the reset unit is not reset anymore. In response to stopping of toggling of the clock signal monitored by the reset unit, the reset unit provides a reset signal to the multiplexer unit after a latency depending on the period of the other clock signal in order to reset the synchronizer for the non-toggling clock signal. This allows the glitch-free clock multiplexer to switch between a non-toggling current output clock signal and a next output clock signal.

The glitch-free clock multiplexer can be configured for providing the first clock signal to the reset inputs of the first timer and for providing the second clock signal to the reset inputs of the second timer. The glitch-free clock multiplexer can be configured for providing the second clock signal to edge triggered inputs of the first timer and for providing the first clock signal to edge triggered inputs of the second timer. The glitch-free clock multiplexer can be configured for providing an inverted control signal generated based on the control signal to a data input of the first timer and for providing the control signal to a data input of the second timer. This allows for providing a simple and cost efficient circuit for controlling the reset units.

The timer can include or be a synchronizer, e.g. a two flop synchronizer. This allows providing simple and cost efficient reset units. The timer can cause a delay for resetting the synchronizers in order to avoid glitches. The synchronizer can for example include a series of two or more edge triggered flip-flops. Increasing the number of flip-flops in the series allows to increase the mean time between failure (MTBF).

The glitch-free clock multiplexer can comprise a first toggling detection unit and a second toggling detection unit. The first toggling detection unit can be configured for detecting a toggling of the first clock signal and for providing an inactive first clock signal if the first clock signal is not toggling. The second toggling detection unit can be configured for detecting a toggling of the second clock signal and for providing an inactive second clock signal if the second clock signal is not toggling. The toggling detection units can be edge detection units configured for detecting edges of the clock signals. This allows to determine whether the clock signals are toggling based on occurrence of edges in the clock signals.

The first toggling detection unit can be arranged for providing the inactive first clock signal to the first reset unit and the second toggling detection unit can be arranged for providing the inactive second clock signal to the second reset unit. The first toggling detection unit can be arranged such that it can process the first clock signal before it is provided to the reset inputs of the first timer and the second toggling detection unit can be arranged such that it can process the second clock signal before it is provided to the reset inputs of the second timer. This allows to provide the inactive first and second clock signals to the reset inputs of the timers such that the timers are not reset and such that the first and second reset signals can be provided.

Each toggling detection unit can be configured for providing the inactive clock signal to the respective reset unit with a high state, e.g. 1, except in cases that the clock signal provided to the toggling detection unit changes, e.g., when an edge is detected. In that case, the inactive clock signal can be provided with a low state, e.g., a 0, for a certain delay of a component of the toggling unit, such as an inverter.

The toggling detection units can include an inverter, a buffer, a XOR-logic, and/or a XNOR-logic. The toggling detection units preferably include an inverter and a XOR-logic in case that the reset input of the timer is active-low, e.g., logical 0, when the clock signal is toggling. This means that flip-flops of the timer are reset when the reset input is set to the low state, e.g., logical 0. The glitch-free clock multiplexer can be configured for providing a clock signal to the inverter and to one input of the XOR-logic. The other input of the XOR-logic can be provided with the output of the inverter. The toggling detection units can be arranged such that their output can be provided to respective reset units, for example to reset inputs of the reset units. This allows to detect whether a clock signal is not toggling even when a logic level or state of the clock signal is unknown during inactivity or when the logic level or state changes during inactivity. Furthermore, an inactive clock signal with a defined and constant logic level or state can be provided that can be processed by the reset units in order to generate a respective reset signal. The toggling detection units preferably include an inverter and a XNOR-logic or a buffer and a XOR-logic in case that the reset input of the timer is active-high, e.g., logical 1, when the clock signal is toggling. This means that flip-flops of the timer are reset when the reset input is set to the high state, e.g., logical 1.

The inactive clock signals are preferably adapted to the active state of the reset input of the timer, i.e., active-high or active-low.

The glitch-free clock multiplexer can comprise one or more inverters configured for inverting a clock signal. The glitch-free clock multiplexer can for example comprise two inverters arranged such that each of the inverters can invert one of the clock signals before it is provided to a respective reset unit. This allows to provide inverted clock signals to the reset units. This can improve operation of the glitch-free clock multiplexer for example in case that non-return-to-zero (NRZ) clock signals are used and the clock stops toggling on a high state.

The glitch-free clock multiplexer can be configured for using return-to-zero (RZ) clock signals. This allows to operate the reset units without toggling detection unit and/or inverter. Alternatively, the glitch-free clock multiplexer can be configured for using NRZ clock signals.

The glitch-free clock multiplexer can be configured for selecting another clock signal which is toggling as next output clock signal even if the currently selected output clock signal is not toggling.

The glitch-free clock multiplexer can be configured for resetting the glitch-free clock multiplexer when the glitch-free clock multiplexer is activated. Resetting the glitch-free clock multiplexer corresponds to setting all register values of the glitch-free clock multiplexer to zero. The glitch-free clock multiplexer can comprise an initial reset unit configured for setting all register values to zero when the glitch-free clock multiplexer is activated. This allows to increase a fault tolerance of the glitch-free clock multiplexer.

The control signal can be generated by a control unit. The control unit can be an external unit that provides the control signal to the glitch-free clock multiplexer via the control signal input. The control unit can for example be a register driven by the clock signals. This allows the control signal to be based on the clock signals.

The glitch-free clock multiplexer can for example be used in an integrated circuit (IC) in which communication is performed via serial peripheral interface (SPI), e.g. an SPI interface for configuration of the IC. For this case, the IC or parts of the IC can for example be operated at different clock rates. For example, in normal operation mode, the IC or parts of the IC can be operated by a standard system clock while the IC or parts of it are operated by a SPI clock, when the SPI is active.

In a further aspect of the present invention, an IC comprising the glitch-free clock multiplexer according to claim 1 or any embodiment of the glitch-free clock multiplexer is presented. The IC additionally comprises a control unit configured for providing the control signal, and two clocks for providing the two clock signals. Since the glitch-free clock multiplexer allows glitch-free clock switching between the clock signals, components of the IC can be operated with different clock rates.

The IC can include various other components, for example components that are operated based on the output clock signal provided by the glitch-free clock multiplexer. The control unit can be a selector configured for providing the control signal as a select signal for selecting one of the clock signals as output clock signal.

In a further aspect of the present invention a method for providing an output clock signal selected from a first clock signal and a second clock signal is presented. The method comprises, among others, the steps
- providing the first clock signal and the second clock signal,
- providing a control signal,
- providing a first reset signal based on the control signal and the first clock signal not toggling,
- providing a second reset signal based on the control signal and the second clock signal not toggling,
- disabling a current output clock signal before enabling a next output clock signal based on the control signal and the clock signals, such that only one of the clock signals is enabled to be selected as output clock signal at a time,
- selecting the clock signal which is enabled as the output clock signal, such that switching between the clock signals is performed with a latency which is at least as long as a smallest period of both of the clock signals in order to avoid glitches, and
- when the first clock signal is not toggling, disabling the first clock signal and enabling the second clock signal based on the first reset signal, and
- when the second clock signal is not toggling, disabling the second clock signal and enabling the first clock signal based on the second reset signal.

In a further aspect of the present invention a computer program product for providing an output clock signal selected from two clock signals is presented. The computer program product comprises program code means for causing the IC according to claim 9 to carry out the method as defined in claim 10, when the computer program product is run on the IC. The computer program product can comprise program code means for causing any embodiment of the IC to carry out the method as defined in claim 10 or any embodiment of the method, when the computer program product is run on the IC.

In a further aspect a computer readable medium having stored the computer program product of claim 11 is presented. Alternatively or additionally, the computer readable medium can have the computer program product according to any embodiment of the computer program product stored.

It shall be understood that the glitch-free clock multiplexer of claim 1, the method for providing an output clock signal selected from two clock signals of claim 10, the computer program product of claim 11 have similar and/or identical preferred embodiments, in particular, as defined in the dependent claims.

It shall be understood that a preferred embodiment of the present invention can also be any combination of the dependent claims or above embodiments with the respective independent claim.

The present invention will be more fully understood from the following detailed description of embodiments thereof, taken together with the drawings in which:
Fig. 1 shows a first embodiment of a glitch-free clock multiplexer in an IC;
Fig. 2 shows an embodiment of a reset unit in form of a timer;
Fig. 3 shows a second embodiment of a glitch-free clock multiplexer;
Fig. 4 shows a third embodiment of a glitch-free clock multiplexer according to the present invention;
Fig. 5 shows an embodiment of an edge detection unit;
Fig. 6 shows an exemplary diagram of toggling of signals of the glitch-free clock multiplexer;
Fig. 7 shows an embodiment of a method for glitch-free switching between clock signals.

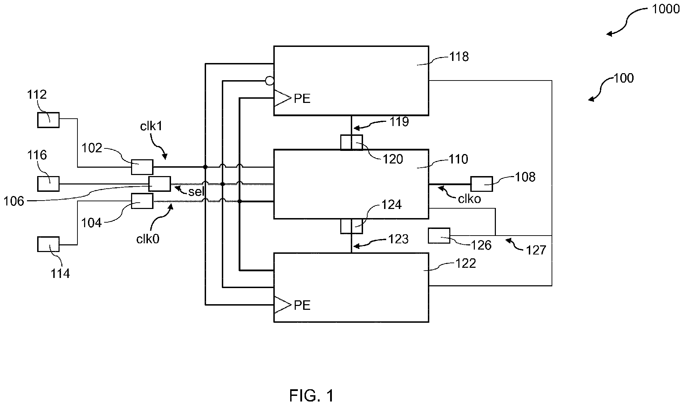

Fig. 1 shows a first embodiment of a glitch-free clock multiplexer 100 in an IC 1000. The glitch-free clock multiplexer 100 can be used for providing an output clock signal clko se-lected from a first clock signal clk1 and a second clock signal clk1.

The glitch-free clock multiplexer 100 includes a first clock signal input 102 for receiving the first clock signal clk1, a second clock signal input 104 for receiving the second clock signal clk0, a control signal input in form of select signal input 106 for receiving a control signal in form of a select signal sel, an output clock signal output 108 for the output clock signal clko, a multiplexer unit 110, a first reset signal input 120 for receiving a first reset signal 119, a second reset signal input 124 for receiving a second reset signal 123, and an initial reset unit 126 for providing an initial reset signal 127.

The IC 1000 includes the glitch-free clock multiplexer 100, a first clock 112 for providing the first clock signal clk1, a second clock 114 for providing the second clock signal clk0, a control unit in form of selector 116, a first reset unit in form of a first timer 118 for providing the first reset signal 119 and a second reset unit in form of a second timer 122 for providing the second reset signal 123. In other embodiments the reset units can be included in the glitch-free clock multiplexer.

The first clock 112 provides the first clock signal clk1 to the multiplexer unit 110 and to the timers 118 and 122 via the first clock signal input 102. The second clock 114 provides the second clock signal clk0 to the multiplexer unit 110 and to the timers 118 and 122 via the second clock signal input 104.

The select signal sel is provided to the multiplexer unit 110 and the timers 118 and 122 via the select signal input 106. As the first timer 118 includes an inverter at its input for the select signal sel in this embodiment, an inverted select signal is provided to the first timer 118.

In this embodiment, the select signal sel is generated in the selector 116. In other embodiments the select signal can also be provided from an external source, such as another IC (not shown). In other embodiments, the select signal may also be generated by a register driven by the clock signals.

The select signal sel decides which of the clock signals clk0 or clk1 is provided as output clock signal clko. When the select signal sel for example selects the first clock signal clk1 as output clock signal clko, the multiplexer unit 110 provides the first clock signal clk1 as output clock signal clko with a latency which is at least as long as a smallest period of both of the clock signals clk0 and clk1 in order to avoid glitches due to the switching and to distinguish an active from an inactive clock.

In this embodiment, the multiplexer unit 110 disables a current output clock signal before it enables a next output clock signal based on the select signal sel and the clock signals clk0 and clk1, such that only one of the clock signals clk0 or clk1 is enabled to be selected as output clock signal clko at a time.

The clock signal clk0 or clk1 which is enabled is selected as the output clock signal clko, such that switching between the clock signals clk0 and clk1 is performed with a latency which is at least as long as a smallest period of both of the clock signals clk0 and clk1 in order to avoid glitches. The multiplexer unit 110 can for example include a synchronizer for each of the clock signals clk0 and clk1 for adding a latency before switching. Each of the synchronizers can be connected to one of the reset signal inputs 120 and 124 in order to be reset based on the reset signals 119 and 123, when the respective reset signal is in a high state. Resetting the synchronizers corresponds to setting the synchronizer to its initial state, e.g., setting all register values to zero.

The first timer 118 provides the first reset signal 119 to the first reset signal input 120. The output of the first timer 118 changes from a low state to a high state with a latency that depends on the period of the second clock signal clk0 received at an edge triggered input PE of the first timer 118. The first timer 118 is regularly reset by the first clock signal clk1 as long as the first clock signal clk1 is toggling such that the output of the first timer 118 is at a low state.

The output of the first timer 118 only changes to the high state when the first clock signal clk1 is not toggling and when the select signal sel selects the second clock signal clk0 as output clock signal clko. In this case the first timer 118 is not reset anymore and after the latency that depends on the period of the second clock signal clk0 the output of the first timer 118 changes to the high state.

The second timer 122 works essentially identical to the first timer 118. The second timer 122 provides the second reset signal 123 to the second reset signal input 124. In contrast to the first timer 118, the second timer 122 does not have an inverter at its input for the select signal, such that only one of the timers 118 and 122 is enabled for changing its output to the high state and providing a respective reset signal 119 or 123 with the high state at a time. Furthermore, the second timer 122 changes its output from the low state to the high state with a latency that depends on the period of the first clock signal clk1 received at its edge triggered input PE. Hence, when the second clock signal clk0 stops toggling and when the select signal sel selects the first clock signal clk1 as output clock signal clko, the second reset signal 123 is provided at a high state as the second timer 122 is not regularly reset by the second clock signal clk0 anymore.

The multiplexer unit 110 disables the first clock signal clk1 and enables the second clock signal clk0 when the first reset signal 119 resets the multiplexer unit 110 via the first reset signal input 120. The multiplexer unit 110 furthermore disables the second clock signal clk0 and enables the first clock signal clk1 when the second reset signal 123 resets the multiplexer unit 110 via the second reset input 124. This allows to switch between the clock signals clk0 and clk1 even if the current output clock signal is not toggling.

The initial reset unit 126 transmits the initial reset signal 127 to the multiplexer unit 110 and the timers 118 and 122 when the glitch-free clock multiplexer 100 is activated such that all register values of the multiplexer unit 110 and the timers 118 and 122 are set to an initial state, i.e., in this embodiment the register values are set to 0. This allows resetting the glitch-free clock multiplexer 100 when the glitch-free clock multiplexer 100 is activated.

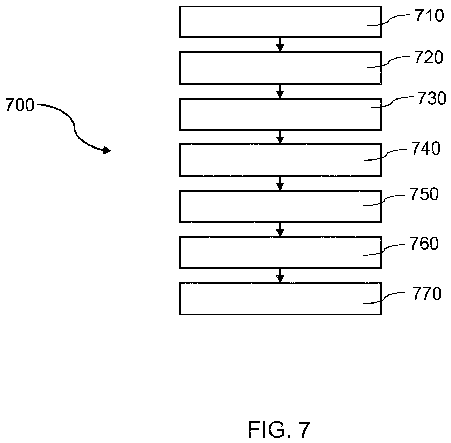

The IC can optionally include or be connected to a memory for storing a computer program product for providing an output clock signal selected from two clock signals. The computer program product comprises program code means for causing the IC to carry out a method for providing the output clock signal selected from two clock signals when the computer program product is run on the IC, e.g. the method as presented in Fig. 7. The memory can furthermore include a computer program product for operating the IC.

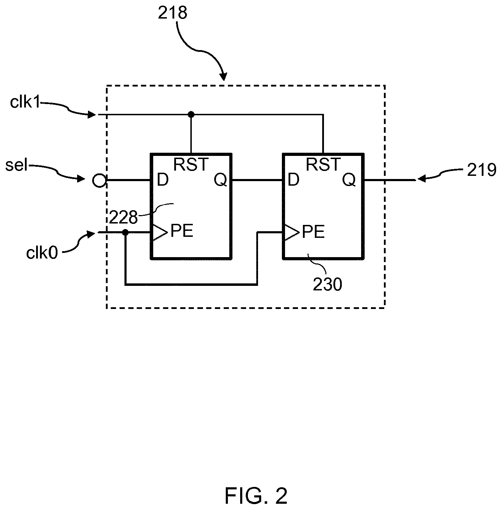

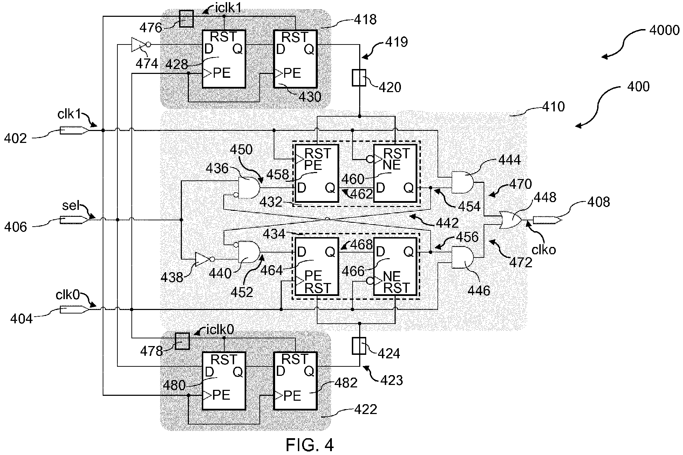

Fig. 2 shows an embodiment of a reset unit in form of a first timer 218. The first timer 218 is provided with the first clock signal clk1, the inverted select signal generated by inverting the select signal sel, and the second clock signal clk0. The first timer 218 is used to monitor a toggling of the first clock signal clk1. The first timer 218 provides a first reset signal 219 for disabling the first clock signal clk1 when the first clock signal clk1 is not toggling, i.e., the first timer 218 outputs a high state for the first reset signal 219 when the first clock signal clk1 is not toggling. In other embodiments, the reset unit can be provided without inverter and can for example be used as second timer. The reset unit can for example be used in the embodiments of the glitch-free clock multiplexer as presented in Fig. 1 or Fig. 4.

The first timer 218 includes two positive edge triggered D flip-flops 228 and 230. In other embodiments, the reset unit can also comprise one or more than two edge triggered flip-flops. The reset unit can also for example comprise a negative edge triggered flip-flop, a series of negative edge triggered flip-flops, or a combination of positive edge triggered flip-flops and negative edge triggered flip-flops. The edge triggered flip-flops can be edge triggered D flip-flops.

Each of the positive edge triggered D flip-flops 228 and 230 includes a reset input RST, a data input D, an output Q, and a positive edge triggered input PE.

The reset inputs RST are provided with the first clock signal clk1 such that the positive edge triggered D flip-flops 228 and 230 are reset continuously as long as the clock signal clk1 is in a high state, i.e., in this case the high state corresponds to a 1. When the first clock signal clk1 toggles, the first clock signal clk1 regularly provides a 1 in order to reset the first timer 218. When the first clock signal clk1 stops toggling, the reset inputs RST receive a 0 and the positive edge triggered D flip-flops 228 and 230 are not reset anymore. In this embodiment, the clock signal clk1 provides a 0 when the clock is inactive, i.e., when the clock signal clk1 is not toggling.

In other embodiments, a high state with a 1 may be provided by the clock signal clk1 when the clock signal clk1 is not toggling. In this case a respective inverter may be arranged between the clock and the reset unit in order to stop resetting the reset unit when the clock signal clk1 provided to the reset inputs of the reset unit is not toggling. In yet other embodiments, it may not be known whether a 0 or 1 is provided in the non-toggling state as the clock may stop during the high state with a 1 or the low state with a 0. In such cases, a toggling detection unit can be provided that determines whether the clock signal is toggling or not. The toggling detection unit can provide an inactive clock signal which is 0 if the clock is not toggling and 1 if the clock is toggling.

In the following we look at the case in which the first clock signal clk1 is not toggling and the positive edge triggered D flip-flops 228 and 230 are not reset anymore. The data input D of the positive edge triggered D flip-flop 228 is provided with the inverted select signal in this embodiment. Hence, if the select signal sel is at the high state, i.e., 1, the data input D is provided with a low state, i.e., 0, and vice versa. Therefore, the positive edge triggered D flip-flop 228 can only change to 1, when the select signal is 0, i.e., the inverted select signal is 1. The second timer (not shown) does not have an inverter for the select signal sel and receives the select signal sel. In other embodiments, the inverter for the select signal sel can also be arranged at the second reset unit instead of the first reset unit. In any case, it is ensured that one of the first reset unit and the second reset unit receives the select signal sel and the other one of the reset units receives the inverted select signal and that the one receiving the select signal sel is the reset unit for disabling the current output clock signal, i.e., the clock signal that is currently not selected.

The positive edge triggered inputs PE of the positive edge triggered D flip-flops 228 and 230 receive the second clock signal clk0. When a positive edge of the second clock signal clk0 is received at the positive edge triggered input PE of the first positive edge triggered D flip-flop 228 and the inverted select signal is 1, the first positive edge triggered D flip-flop 228 changes its state from 0 to 1.

The output Q of the first positive edge triggered D flip-flop 228 is connected to the data input D of the second positive edge triggered D flip-flop 230, such that the second positive edge triggered D flip-flop 230 receives the 1.

The output Q of the second positive edge triggered D flip-flop 230 provides the reset signal 219. When another positive edge of the second clock signal clk0 is received at the positive edge triggered input PE of the second positive edge triggered D flip-flop 230, the state of the second positive edge triggered D flip-flop 230 changes from 0 to 1 and the second positive edge triggered D flip-flop 230 provides the reset signal 219 with a 1 at its output Q.

In this embodiment, the first timer 218 has two positive edge triggered flip-flops that add a latency for providing the reset signal 219. Additionally, the latency depends on the period of the second clock signal clk0. In other embodiments, a series of edge triggered flip-flops can be provided with a number of flip-flops adapted to a difference of the periods of the two clock signals. Preferably, the number of flip-flops in the reset unit is adapted to a ratio of the frequencies of the first clock signal and the second clock signal. This allows to ensure that a current output clock signal is not prematurely disabled when it is toggling and a next output clock signal is selected.

In summary, the reset unit allows for providing a reset signal based on the control signal and the clock signals. The reset unit can be configured for monitoring a toggling of a clock signal, and for providing the reset signal for disabling a current output clock signal and for enabling a next output clock signal when the current output clock signal is not toggling and the next output clock signal is selected. The reset unit can comprise or be a timer which can be configured to be reset based on the clock signal that the reset unit monitors and for disabling the clock signal that the reset unit monitors when the clock signal that the reset unit monitors stops toggling and with a latency depending on a period of the other clock signal.

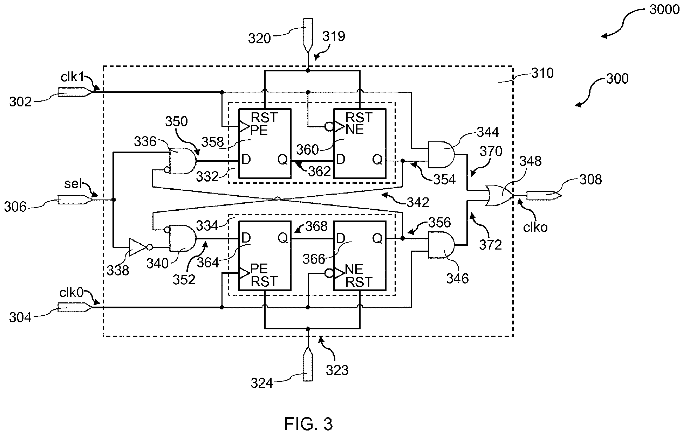

Fig. 3 shows a second embodiment of the glitch-free clock multiplexer 300 for providing an output clock signal clko selected from a first clock signal clk1 and a second clock signal clk0. The glitch-free clock multiplexer 300 is part of an IC 3000. The IC 3000 comprises further components, such as clocks, reset units, and a control unit (not shown).

The glitch-free clock multiplexer 300 includes a first clock signal input 302 for receiving the first clock signal clk1, a second clock signal input 304 for receiving the second clock signal clk0, a control signal input in form of select signal input 306 for receiving a control signal in form of a select signal sel, an output clock signal output 308 for the output clock signal clko, a multiplexer unit 310, a first reset signal input 320 for receiving a first reset signal 319, and a second reset signal input 324 for receiving a second reset signal 323.

The multiplexer unit 310 includes a first synchronizer 332 for enabling the first clock signal clk1, a second synchronizer 334 for enabling the second clock signal clk0, a first AND-logic 336, an inverter 338, a second AND-logic 340, feedback lines 342, a third AND-logic 344, a fourth AND-logic 346, and an OR-logic 348.

The synchronizers 332 and 334 are connected with each other via the feedback lines 342 such that enabling one of the clock signals is only possible after the other one of the clock signals is disabled. Furthermore, the synchronizers 332 and 334 enable one of the clock signals with a latency which is at least as long as a smallest period of both of the clock signals clk0 and clk1.

The first AND-logic 336 provides a first AND-logic output signal 350 based on the select signal sel and an inverted enable second clock signal received via the feedback lines 342.

The inverter 338 inverts the select signal sel and provides it to the second AND-logic 340. The second AND-logic 340 provides a second AND-logic output signal 352 based on an inverted enable first clock signal received via the feedback lines 342 and the inverted select signal.

The first synchronizer 332 provides an enable first clock signal 354 based on the first AND-logic output signal 350, the first clock signal clk1 and the first reset signal 319. The first synchronizer 332 can be reset by the first reset signal 319, if it is in its high state.

The second synchronizer 334 provides an enable second clock signal 356 based on the second AND-logic output signal 352, the second clock signal clk0, and the second reset signal 323. The second synchronizer 334 can be reset by the second reset signal 323, if it is in its high state.

In this embodiment the first synchronizer 332 includes a positive edge triggered D flip-flop 358 and a negative edge triggered D flip-flop 360. The edge triggered inputs PE and NE of the edge triggered D flip-flops 358 and 360 are provided with the first clock signal clk1. The edge triggered D flip-flops 358 and 360 are arranged in series such that an output signal 362 of the positive edge triggered D flip-flop 358 is provided from its output Q to a data input D of the negative edge triggered D flip-flop 360. The edge triggered D flip-flops 358 and 360 can be reset via reset inputs RST by the first reset signal 319.

In this embodiment the second synchronizer 334 includes a positive edge triggered D flip-flop 364 and a negative edge triggered D flip-flop 366. The edge triggered inputs PE and NE of the edge triggered D flip-flops 364 and 366 are provided with the second clock signal clk0. The edge triggered D flip-flops 364 and 366 are arranged in series such that an output signal 368 of the positive edge triggered D flip-flop 364 is provided from its output Q to a data input D of the negative edge triggered D flip-flop 366. The edge triggered D flip-flops 364 and 366 can be reset via reset inputs RST by the second reset signal 323.

The third AND-logic 344 provides a third AND-logic output signal 370 based on the first clock signal clk1 and the enable first clock signal 354.

The fourth AND-logic 346 provides a fourth AND-logic output signal 372 based on the second clock signal clk0 and the enable second clock signal.

The OR-logic 348 provides the output clock signal clko based on the third AND-logic output signal 370 and the fourth AND-logic output signal 372, i.e., the output clock signal clko is selected from the first clock signal clk1 and the second clock signal clk0.

Fig. 4 shows a third embodiment of the glitch-free clock multiplexer 400 according to the present invetion in an IC 4000. The IC 400 includes further components, such as clocks and a control unit (not shown). The glitch-free clock multiplexer 400 is similar to the second embodiment of the glitch-free clock multiplexer 300 in that the multiplexer unit 310 and the multiplexer unit 410 are identical. The components of the multiplexer units 310 and 410 have alike reference signs with the difference that the components of the multiplexer unit 310 are named with 3xx and the components of the multiplexer unit 410 are named with 4xx. The difference between the second and the third embodiment of the glitch-free clock multiplexer is that the glitch-free clock multiplexer 400 of the third embodiment additionally includes a first timer 418, a second timer 422, and an inverter 474 for providing an inverted select signal to the first timer 418.

The first timer 418 and the second timer 422 are similar and work similar to the first timer 218 presented in Fig. 2. The first timer 418 provides a first reset signal 419 based on a control signal in form of select signal sel and the clock signals clk0 and clk1 to the multiplexer unit 410 via first reset signal input 420. The second timer 422 provides a second reset signal 423 based on the control signal in form of select signal sel and the clock signals clk0 and clk1 to the multiplexer unit 410 via second reset signal input 424.

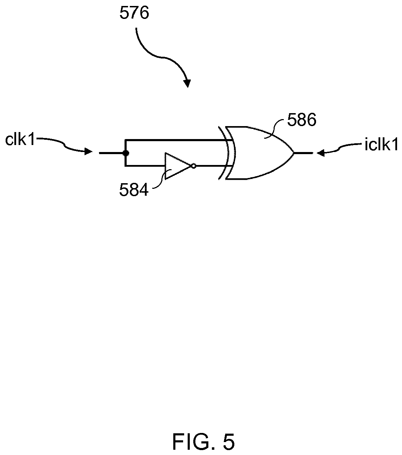

In this embodiment, the first timer 418 additionally includes an optional first toggling detection unit in form of a first edge detection unit 476 and the second timer 422 additionally includes an optional second toggling detection unit in form of a second edge detection unit 478. The edge detection units 476 and 478 in this embodiment correspond to edge detection unit 576 presented in Fig. 5. In other embodiments, another toggling detection unit can be provided, that is configured for detecting a toggling of the clock signal provided to the toggling detection unit and for providing an inactive clock signal if the clock signal is not toggling. In yet other embodiments, no toggling detection unit is provided, e.g., in embodiments in which non-toggling states of the clock signals are known. The edge detection unit 576 includes an inverter 584 and a XOR-logic 586. The edge detection unit 576 is provided with the first clock signal clk1 and provides an inactive first clock signal iclk1. The edge detection unit 576 generates a short pulse with a length defined by the time delay of the inverter 584 if there is a change of the input of the edge detection unit 576. The inverter 584 acts as a buffer in this case. If the edge detection unit is provided with the second clock signal clk0, it provides an inactive second clock signal iclk2. If the clock signal provided to the edge detection unit 576 is not toggling, the inactive clock signal is 0. If the clock signal provided to the edge detection unit 576 is toggling, the inactive clock signal is 1.

Hence, the first timer 418 monitors a toggling of the first clock signal clk1 and the second timer 422 monitors a toggling of the second clock signal clk0. The first timer 418 provides the first reset signal 419 for disabling the first clock signal clk1 and for enabling the second clock signal clk0, when the first clock signal clk1 is not toggling and the second clock signal clk0 is selected as next output clock signal. The second timer 422 provides the second reset signal 423 for disabling the second clock signal clk0 and for enabling the first clock signal clk1, when the second clock signal clk0 is not toggling and the first clock signal clk1 is selected as next output clock signal.

The timers 418 and 422 are reset based on the clock signal that the respective timer 418 and 422 monitors, i.e., the first timer 418 is reset based on the first clock signal clk1 and the second timer 422 is reset by the second clock signal clk0. Therefore, the first clock signal clk1 is processed by the first edge detection unit 476 and the inactive first clock signal iclk1 is provided to reset inputs RST of positive edge triggered D flip-flops 428 and 430 for resetting the first timer 418. Correspondingly, the second clock signal clk0 is processed by the second edge detection unit 478 and the inactive second clock signal iclk0 is provided to reset inputs RST of positive edge triggered D flip-flops 480 and 482 for resetting the second timer 422.

The timers 418 and 422 reset the respective synchronizer 432 and 434 of the clock signal that the respective timer 418 and 422 monitors when the clock signal that the timer 418 and 422 monitors stops toggling. Resetting is performed with a latency that depends on a period of non-monitored clock signal. This means the first timer 418 resets the first synchronizer 432 of the first clock signal clk1 when the first clock signal clk1 stops toggling with a latency that depends on the period of the second clock signal clk0 and correspondingly for the second timer 422.

Each of the timers 418 and 422 includes a series of edge triggered D flip-flops 428, 430, 480, and 482. In this embodiment each of the timers 418 and 422 includes two edge triggered D flip-flops 428, 430, 480, and 482. A data input D of a first edge triggered D flip-flop 428 and 480 in the series is provided with the inverted select signal and respectively with the select signal sel. The positive edge triggered D flip-flops 428, 430, 480, and 482 are arranged such that an output signal of the first edge triggered D flip-flop 428 and 480 is provided from output Q to a data input D of the second positive edge triggered D flip-flop 430 and 482 of the series of positive edge triggered D flip-flops 428, 430, 480, and 482.

The reset inputs RST of the positive edge triggered D flip-flops 428, 430, 480, and 482 are provided with the clock signal that the respective timer 418 and 422 monitors, such that the timers 418 and 422 are regularly reset while the clock signal it is monitoring is toggling.

Positive edge triggered inputs PE of the positive edge triggered D flip-flops 428, 430, 480, and 482 are provided with the non-monitored clock signal. This allows adding a latency for providing the reset signal when the monitored clock signal stops toggling based on the period of the non-monitored clock signal. In other embodiments the latency can for example be further increased by increasing the number of edge triggered flip-flops in the series of edge triggered flip-flops.

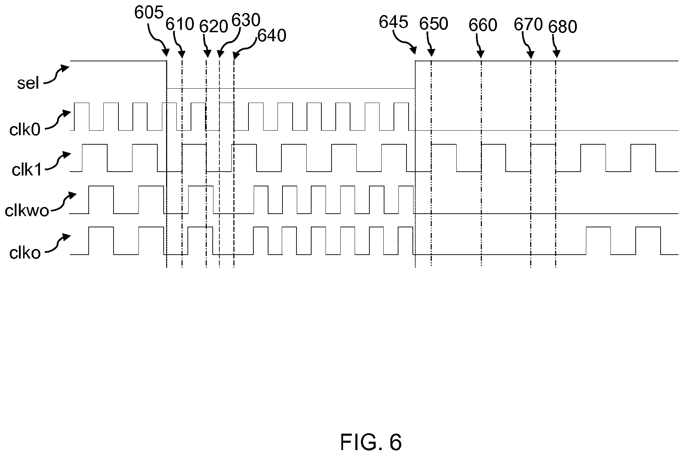

The functionality of the glitch-free clock multiplexer 400 will be explained for exemplary switching between toggling and non-toggling clock signals with respect to Fig. 6 in the following.

Fig. 6 shows an exemplary diagram of toggling of signals of the glitch-free clock multiplexer 400 presented in Fig. 4 with output clock signal clko compared to an output clock signal clkwo of a glitch-free clock multiplexer without a reset signal that reset the second synchronizer when second clock signal clk0 is not toggling. The output clock signals clko and clkwo are time delayed with respect to the second clock signal clk0 and the first clock signal clk1 due to time delays caused by the logics, including the AND-logics and the OR-logics.

The diagram includes a control signal in form of select signal sel, the second clock signal clk0, a first clock signal clk1, the output clock signal clkwo of the glitch-free clock multiplexer without using the reset signal, and the output clock signal clko as provided by the glitch-free clock multiplexer 400 presented in Fig. 4.

The diagram shows that initially the first clock signal clk1 is provided as output clock signal clko and clkwo, respectively as the select signal sel is in the high state. In this embodiment the high state corresponds to 1 and the low state corresponds to 0 and the signals are NRZ-signals.

The select signal sel initiates switching between the first clock signal clk1 and the second clock signal clk0 at a point in time 605 by changing from the high state to the low state, i.e. from 1 to 0. The select signal sel is provided to the first AND-logic 436, the data input D of the positive edge triggered D flip-flop 480 of the second timer 422, and to inverters 438 and 474 in order to generate an inverted select signal, i.e., with a 1, that is provided to the second AND-logic 440 and the data input D of the positive edge triggered D flip-flop 428 of the first timer 418. In the following, we will concentrate on the effects that changing the select signal sel has on the glitch-free clock multiplexer 400. The first AND-Logic 436 in response, switches its output from 1 to 0 and provides a first AND-logic signal 450 with a 0 such that the subsequent positive edge triggered D flip-flop 458 of the first synchronizer 432 receives the 0 at its data input D.

At a point in time 610, the positive edge triggered D flip-flop 458 of the first synchronizer 432 is triggered by the positive edge of the first clock signal clk1 which switches from 0 to 1. This causes the positive edge triggered D flip-flop 458 to set its output signal 462 to 0, such that the output Q provides a 0 to the data input D of the subsequent negative edge triggered D flip-flop 460 of the first synchronizer 432. Additionally, the first timer 418 is reset as an inactive first clock signal iclk1 generated based on the first clock signal clk1 by the edge detection unit 476 provides a 1 to the reset inputs RST of the positive edge triggered D flip-flops 428 and 430 of the first timer 418.

At a point in time 620, the negative edge triggered D flip-flop 460 of the first synchronizer 432 is triggered by the negative edge of the first clock signal clk1 which switches from 1 to 0. This causes the negative edge triggered D flip-flop 460 to set its output signal to 0, such that the output Q provides an enable first clock signal 454 with a 0. The enable first clock signal 454 is provided to the third AND-logic 444 and as inverted enable first clock signal to the second AND-logic 440 via the respective one of the feedback lines 442. The enable first clock signal 454 causes the third AND-logic 444 to provide a third AND-logic signal 470 with 0, i.e., the first clock signal clk1 is disabled. Thus, starting from point in time 620 no clock signal is provided as current output clock signal, but a 0 is provided as output clock signal clko.

The inverted enable first clock signal is provided to the second AND-logic 440, such that the second AND-logic 440 based on the inverted enable first clock signal with a 1 and the inverted select signal sel with a 1 provides a second AND-logic signal 452 with a 1. The second AND-logic signal 452 with 1 is provided to the data input D of the positive edge triggered D flip-flop 464 of the second synchronizer 434.

At a point in time 630, the positive edge triggered D flip-flop 464 of the second synchronizer 434 is triggered by the positive edge of the second clock signal clk0 which switches from 0 to 1. This causes the positive edge triggered D flip-flop 464 to set its output signal 468 to 1, such that the output Q provides a 1 to the data input D of the subsequent negative edge triggered D flip-flop 466 of the second synchronizer 434. Additionally, the second timer 422 is reset as an inactive second clock signal iclk0 generated based on the second clock signal clk0 by the edge detection unit 478 provides a 1 to the reset inputs RST of the positive edge triggered D flip-flops 480 and 482 of the second timer 422.

At a point in time 640, the negative edge triggered D flip-flop 466 of the second synchronizer 434 is triggered by the negative edge of the second clock signal clk0 which switches from 1 to 0. This causes the negative edge triggered D flip-flop 466 to set its output signal to 1, such that the output Q provides an enable second clock signal 456 with a 1. The enable second clock signal 456 is provided to the fourth AND-logic 446 and as inverted enable second clock signal to the first AND-logic 436 via the respective one of the feedback lines 442. The enable second clock signal 456 causes the fourth AND-logic 446 to provide the second clock signal clk0 as a fourth AND-logic signal 472, i.e., enabling the second clock signal clk0. Thus, starting from point in time 640 the clock signal clk0 becomes the output clock signal clko.

At a point in time 645, the select signal sel changes from 0 to 1 and initiates a switching from the second clock signal clk0 to the first clock signal clk1. However, in this case the second clock signal clk0 which is the current output clock signal clko is not toggling.

Therefore, for the glitch-free clock multiplexer that does not use the reset signals for resetting the synchronizers, switching is not possible and the output clock signal clkwo stays 0, as the second synchronizer cannot change its state due to missing edges for triggering the edge triggered D flip-flops of the second synchronizer for disabling the second clock signal clk0.

In contrast, the glitch-free clock multiplexer 400 presented in Fig. 4 switches to the first clock signal clk1 at a point in time 680 as will be explained in the following.

At the point in time 645, the select signal sel with a 1 is provided to the first AND-logic 436, the data input D of the positive edge triggered D flip-flop 480 of the second timer 422, and to inverters 438 and 474 in order to generate an inverted select signal, i.e., with a 0, that is provided to the second AND-logic 440 and the data input D of the positive edge triggered D flip-flop 428 of the first timer 418.

At a point in time 650, the positive edge triggered D flip-flop 480 of the second timer 422 is triggered by the positive edge of the first clock signal clk1 which switches from 0 to 1. This causes the positive edge triggered D flip-flop 480 to set its output signal to 1 such that its output Q provides a 1 to the data input D of the subsequent positive edge triggered D flip-flop 482.

At a point in time 660, the subsequent positive edge triggered D flip-flop 482 of the second timer 422 is triggered by the positive edge of the first clock signal clk1 which switches from 0 to 1. This causes the positive edge triggered D flip-flop 482 to set its output signal to 1, such that the output Q provides a second reset signal 423 with a 1. The second reset signal 423 is provided to the reset inputs RST of the second synchronizer 434 and thus resets the second synchronizer 434, such that the second synchronizer 434 provides an enable second clock signal 456 with a 0, i.e., the second reset signal 423 disables the second clock signal clk0. Thus, starting from point in time 660, no clock signal is provided as current output clock signal, but a 0 is provided as output clock signal clko.

An inverted enable second clock signal is provided to the first AND-logic 436 via the respective one of the feedback lines 442, such that the first AND-logic 436 based on the inverted enable second clock signal with a 1 and the select signal sel with a 1 provides the first AND-logic signal 450 with a 1. The first AND-logic signal 450 is provided to the data input D of the positive edge triggered D flip-flop 458 of the first synchronizer 432.

At a point in time 670, the positive edge triggered D flip-flop 458 of the first synchronizer 432 is triggered by the positive edge of the first clock signal clk1, which switches from 0 to 1. This causes the positive edge triggered D flip-flop 458 to set its output signal 462 to 1, such that the output Q provides a 1 to the data input D of the subsequent negative edge triggered D flip-flop 460 of the first synchronizer 432. Additionally, the first timer 418 is reset as the inactive first clock signal iclk1 generated based on the first clock signal clk1 by the edge detection unit 476 provides a 1 to the reset inputs RST of the positive edge triggered D flip-flops 428 and 430 of the first timer 418.

At a point in time 680, the negative edge triggered D flip-flop 460 of the first synchronizer 432 is triggered by the negative edge of the first clock signal clk1 which switches from 1 to 0. This causes the negative edge triggered D flip-flop 460 to set its output signal to 1, such that its output Q provides an enable first clock signal 454 with a 1. The enable first clock signal 454 is provided to the third AND-logic 444 and as inverted enable first clock signal to the second AND-logic 440 via the respective one of the feedback lines 442. The enable first clock signal 454 causes the third AND-logic 444 to provide the first clock signal clk1 as third AND-logic signal 470, i.e., enabling the first clock signal clk1. Thus, starting from point in time 680 the clock signal clk1 becomes the current output clock signal clko.

Therefore, switching from a non-toggling clock signal clk0 to another clock signal clk1 is possible using the glitch-free multiplexer 400 which uses reset signals for resetting its multiplexer unit 410 when the current output clock signal is not toggling.

Fig. 7 shows an embodiment of a method 700 for providing an output clock signal selected from a first clock signal and a second clock signal.

In step 710, the first clock signal and the second clock signal are provided. The first clock signal can be provided by a first clock and the second clock signal can be provided by a second clock.

In step 720, a control signal in form of a select signal is provided. The select signal can be generated by a selector which can be a register driven by the clock signals. When the select signal selects a clock signal as output clock signal which is currently not the output clock signal, switching of the clock signals is initiated, i.e., switching between a current output clock signal and a next output clock signal is initiated.

Steps 710 and 720 can also be performed in reversed order or simultaneously. Preferably the steps are performed simultaneously.

In step 730, a first reset signal is provided based on the control signal and the first clock signal not toggling.

In step 740, a second reset signal is provided based on the control signal and the second clock signal not toggling.

Steps 730 and 740 are performed after steps 710 and 720. Steps 730 and 740 are optional and only need to be performed in case that the current output clock signal is not toggling. Steps 730 and 740 can be performed in reversed order or simultaneously.

In step 750, the current output clock signal is disabled based on the control signal and the clock signals, when the next output clock signal is selected by the control signal to be switched to. In order to avoid glitches, the cycle of the current output clock signal is finished before the next output clock signal is selected. Therefore, a latency which is at least as long as a smallest period of the clock signals is introduced before switching is performed. This latency is introduced by the disabling process and a subsequent enabling process of the next output clock signal.

When the first clock signal is not toggling, the first clock signal is disabled based on the first reset signal. When the second clock signal is not toggling, the second clock signal is disabled based on the second reset signal.

In step 760, the next output clock signal is enabled based on the control signal and the clock signals. The current output clock signal is disabled before the next output clock signal is enabled, such that only one of the clock signals is enabled to be selected as output clock signal at a time.

In step 770, the clock signal which is enabled as the output clock signal is selected. The method 700 of selecting the output clock signal from two clock signals is performed, such that switching between the clock signals is performed with a latency which is at least as long as a smallest period of both of the clock signals in order to avoid glitches.

In summary, the glitch-free clock multiplexer can allow glitch-free switching between clock signals even when one of the clock signals is not toggling. An output clock signal can be selected from two clock signals even if the clock of which the current output clock signal is originating is inactive and not toggling. This allows providing the clock signals by pausable clocks which are currently inactive.

The present invention regards a glitch-free clock multiplexer for providing an output clock signal selected from a first clock signal and a second clock signal. The glitch-free clock multiplexer comprises a multiplexer unit. The multiplexer unit is configured for disabling a current output clock signal before enabling a next output clock signal based on a control signal and the clock signals, such that only one of the clock signals is enabled to be selected as output clock signal at a time. The glitch-free clock multiplexer is configured for selecting the clock signal which is enabled as the output clock signal, such that switching between the clock signals is performed with a latency which is at least as long as a smallest period of both of the clock signals in order to avoid glitches. The multiplexer unit is furthermore configured for disabling the first clock signal and for enabling the second clock signal based on a first reset signal provided based on the control signal and the first clock signal not toggling. The multiplexer unit is furthermore configured for disabling the second clock signal and for enabling the first clock signal based on a second reset signal provided based on the control signal and the second clock signal not toggling. This allows glitch-free switching from a non-toggling clock signal to a toggling clock signal.

## Claims

1. A glitch-free clock multiplexer (100; 300; 400) for providing an output clock signal (clko) selected from a first clock signal (clk1) and a second clock signal (clk0), comprising
- a multiplexer unit (110; 310; 410) configured for disabling a current output clock signal (clk0) before enabling a next output clock signal (clk1) based on a control signal (sel) and the clock signals (clk0, clk1), such that only one of the clock signals (clk0, clk1) is enabled to be selected as output clock signal (clko) at a time,
wherein the glitch-free clock multiplexer (100; 300; 400) is configured for selecting the clock signal (clk1) which is enabled as the output clock signal (clko), such that switching between the clock signals (clk0, clk1) is performed with a latency which is at least as long as a smallest period of both of the clock signals (clk0, clk1) in order to avoid glitches,
wherein the multiplexer unit (310; 410) comprises
- a first synchronizer (332; 432) for enabling the first clock signal (clk1) and
- a second synchronizer (334; 434) for enabling the second clock signal (clk0),
wherein the synchronizers (332, 334; 432, 434) are configured for enabling one of the clock signals (clk0, clk1) with a latency which is at least as long as a smallest period of both of the clock signals (clk0, clk1), and
wherein the synchronizers (332, 334; 432, 434) are connected with each other via feedback lines (342; 442) such that enabling one of the clock signals (clk0, clk1) is only possible after the other one of the clock signals (clk0, clk1) is disabled,
wherein the multiplexer unit (110; 310; 410) is furthermore configured for disabling the first clock signal (clk1) and for enabling the second clock signal (clk0) based on a first reset signal (119; 319; 419) provided based on the control signal (sel) and the first clock signal (clk1) not toggling,
wherein the multiplexer unit (110; 310; 410) is furthermore configured for disabling the second clock signal (clk0) and for enabling the first clock signal (clk1) based on a second reset signal (123; 323; 423) provided based on the control signal (sel) and the second clock signal (clk0) not toggling, and
wherein the glitch-free clock multiplexer further comprises:
- a first reset unit (418) for providing the first reset signal (419) based on the control signal (sel) and the clock signals (clk0, clk1) and configured for monitoring a toggling of the first clock signal (clk1), wherein the first reset unit (418) is configured for providing the first reset signal (419) for disabling the first clock signal (clk1) and for enabling the second clock signal (clk0) when the first clock signal (clk1) is not toggling and the second clock signal (clk0) is selected, and
- a second reset unit (422) for providing the second reset signal (423) based on the control signal (sel) and the clock signals (clk0, clk1), and configured for monitoring a toggling of the second clock signal (clk0), wherein the second reset unit (422) is configured for providing the second reset signal (423) for disabling the second clock signal (clk0) and for enabling the first clock signal (clk1) when the second clock signal (clk0) is not toggling and the first clock signal (clk1) is selected, and
wherein each of the reset units (418, 422) comprises
- a timer (418, 422) which is configured to be reset based on the clock signal (clk1, clk0) that the reset unit (418, 422) monitors,
wherein the timer (418, 422) is configured for resetting the synchronizer (432, 434) of the clock signal (clk1, clk0) that the reset unit (418, 422) monitors when the clock signal (clk1, clk0) that the reset unit (418, 422) monitors stops toggling and with a latency depending on a period of the other clock signal (clk0, clk1).

2. The glitch-free clock multiplexer (100; 300; 400) according to claim 1, comprising one or more of:
- a control signal input (106; 306; 406) for receiving the control signal (sel),
- a first clock signal input (102; 302; 402) for receiving the first clock signal (clk1),
- a second clock signal input (104; 304; 404) for receiving the second clock signal (clk0),
- a first reset signal input (120; 320; 420) for receiving the first reset signal (119; 319; 419) and for disabling the first clock signal (clk1), and
- a second reset signal input (124; 324; 424) for receiving the second reset signal (123; 323; 423) and for disabling the second clock signal (clk0).

3. The glitch-free clock multiplexer (300; 400) according to claim 1 or 2, wherein the multiplexer unit (310; 410) comprises
- a first AND-logic (336; 436) for providing a first AND-logic output signal (350; 450) based on the control signal (sel) and an inverted enable second clock signal, and
- a second AND-logic (340; 440) for providing a second AND-logic output signal (352; 452) based on an inverted enable first clock signal and an inverted control signal generated by inverting the control signal (sel), and
wherein the first synchronizer (332; 432) is configured for providing an enable first clock signal (354; 454) based on the first AND-logic output signal (350; 450), the first clock signal (clk1) and the first reset signal (319; 419),
wherein the first synchronizer (332; 432) is configured to be reset based on the first reset signal (319; 419),
wherein the second synchronizer (334; 434) is configured for providing an enable second clock signal (356; 456) based on the second AND-logic output signal (352; 452), the second clock signal (clk0), and the second reset signal (323; 423), and
wherein the second synchronizer (334; 434) is configured to be reset based on the second reset signal (323; 423).

4. The glitch-free clock multiplexer (300, 400) according to claim 3, wherein the multiplexer unit (310; 410) comprises
- a third AND-logic (344; 444) for providing a third AND-logic output signal (370; 470) based on the first clock signal (clk1) and the enable first clock signal (354; 454),
- a fourth AND-logic (346; 446) for providing a fourth AND-logic output signal (372; 472) based on the second clock signal (clk0) and the enable second clock signal (356; 456), and
- an OR-logic (348; 448) for providing the output clock signal (clko) based on the third AND-logic output signal (370; 470) and the fourth AND-logic output signal (372; 472).

5. The glitch-free clock multiplexer (300; 400) according to at least one of the claims 1 to 4, wherein at least one of the synchronizers (332, 334; 432, 434) comprises a negative edge triggered D flip-flop (360, 366; 460, 466) and a positive edge triggered D flip-flop (358, 364; 458, 464),
wherein edge triggered inputs (NE, PE) of the edge triggered D flip-flops (358, 360, 364, 366; 458, 460, 464, 466) are configured for receiving a respective clock signal (clk0, clk1),
wherein the edge triggered D flip-flops (358, 360, 364, 366; 458, 460, 464, 466) are arranged in series such that an output signal (362, 368; 462, 468) of one of the edge triggered D flip-flops (358, 364; 458, 464) is provided to a data input (D) of the other edge triggered D flip-flop (360, 366; 460, 466), and
wherein the edge triggered D flip-flops (358, 360, 364, 366; 458, 460, 464, 466) are configured for being reset based on a respective reset signal (319, 323; 419, 423).

6. The glitch-free clock multiplexer (400) according to at least one of the claims 1 to 5, wherein the timer (418, 422) includes a series of edge triggered D flip-flops (428, 430, 480, 482),
wherein the timer (418, 422) is configured such that a data input (D) of a first edge triggered D flip-flop (428, 480) in the series is provided with a data signal based on the control signal (sel),
wherein the edge triggered D flip-flops (428, 430, 480, 482) are arranged such that an output signal of a previous edge triggered D flip-flop (428, 480) is provided to a data input (D) of a subsequent edge triggered D flip-flop (430, 482) of the series of edge triggered D flip-flops (428, 430, 480, 482),
wherein the timer (418, 422) is configured such that reset inputs (RST) of the edge triggered D flip-flops (428, 430, 480, 482) are provided with the clock signal (clk1, clk0) that the reset unit (418, 422) monitors, such that the reset unit (418, 422) is regularly reset while the clock signal (clk1, clk0) is toggling, and
wherein the timer (418, 422) is configured such that edge triggered inputs (PE) of the edge triggered D flip-flops (428, 430, 480, 482) are provided with the other clock signal (clk0, clk1).

7. The glitch-free clock multiplexer (400) according to at least one of the claims 1 to 6, comprising
- a first toggling detection unit (476) configured for detecting a toggling of the first clock signal (clk1) and for providing an inactive first clock signal (iclk1) if the first clock signal (clk1) is not toggling, and
- a second toggling detection unit (478) configured for detecting a toggling of the second clock signal (clk0) and for providing an inactive second clock signal (iclk0) if the second clock signal (clk0) is not toggling.

8. The glitch-free clock multiplexer (400) according to at least one of the claims 1 to 7, wherein the glitch-free clock multiplexer (400) is configured for resetting the glitch-free clock multiplexer (400) when the glitch-free clock multiplexer (400) is activated.

9. An integrated circuit (1000) comprising
- the glitch-free clock multiplexer (100) according to at least one of the claims 1 to 8,
- a control unit (116) configured for providing the control signal (sel), and
- two clocks (112, 114) for providing the two clock signals (clk0, clk1).

10. A method (700) for providing an output clock signal selected from a first clock signal and a second clock signal, comprising the steps
- providing the first clock signal and the second clock signal (710),
- providing a control signal (720),
- monitoring a toggling of the first clock signal (clk1) by a first reset unit,
- monitoring a toggling of the second clock signal (clk0) by a second reset unit,
- providing a first reset signal by the first reset unit based on the second clock signal, the control signal, and the first clock signal not toggling (730), wherein the first reset signal is provided by the first reset unit when the first clock signal is not toggling and the second clock signal is selected,
- providing a second reset signal by the second reset unit based on the first clock signal, the control signal, and the second clock signal not toggling (740), wherein the second reset signal is provided by the second reset unit when the second clock signal is not toggling and the first clock signal is selected,
- disabling a current output clock signal (750) before enabling a next output clock signal based on the control signal and the clock signals, such that only one of the clock signals is enabled to be selected as output clock signal at a time (760),
- enabling the first clock signal by a first synchronizer and disabling the second clock signal based on the second reset signal when the second clock signal is not toggling (750) or enabling the second clock signal by a second synchronizer and disabling the first clock signal based on the first reset signal when the first clock signal is not toggling (750), each with a latency which is at least as long as a smallest period of both of the clock signals by resetting a timer included in each of the reset units based on the clock signal that the reset unit monitors and by resetting the synchronizer of the clock signal that the reset unit monitors by the timer when the clock signal that the reset unit monitors stops toggling and with a latency depending on a period of the other clock signal,
wherein the synchronizers are connected with each other via feedback lines such that enabling one of the clock signals is only possible after the other one of the clock signals is disabled, and
- selecting the clock signal which is enabled as the output clock signal, such that switching between the clock signals is performed with a latency which is at least as long as a smallest period of both of the clock signals in order to avoid glitches (770).

11. A computer program product for providing an output clock signal (clko) selected from two clock signals (clk0, clk1), wherein the computer program product comprises program code means for causing the integrated circuit (1000) according to claim 9 to carry out the method (700) as defined in claim 10, when the computer program product is run on the integrated circuit (1000).

## Patentansprüche

1. Störungsfreier Taktmultiplexer (100; 300; 400) zum Bereitstellen eines Ausgangstaktsignals (clko), das aus einem ersten Taktsignal (clk1) und einem zweiten Taktsignal (clk0) ausgewählt wird, mit
- einer Multiplexereinheit (110; 310; 410), die so konfiguriert ist, dass sie ein aktuelles Ausgangstaktsignal (clk0) sperrt, bevor sie ein nächstes Ausgangstaktsignal (clk1) auf der Grundlage eines Steuersignals (sel) und der Taktsignale (clk0, clk1) freigibt, so dass nur eines der Taktsignale (clk0, clk1) freigegeben wird, um als Ausgangstaktsignal (clko) zu einer gegebenen Zeit ausgewählt zu werden,
wobei der störungsfreie Taktmultiplexer (100; 300; 400) so konfiguriert ist, dass er das Taktsignal (clk1), das freigegeben ist, als das Ausgangstaktsignal (clko) auswählt, so dass das Umschalten zwischen den Taktsignalen (clk0, clk1) mit einer Latenzzeit erfolgt, die mindestens so lang wie eine kleinste Periode der beiden Taktsignale (clk0, clk1) ist, um Störungen zu vermeiden,
wobei die Multiplexereinheit (310; 410) folgendes umfasst
- einen ersten Synchronisator (332; 432) zur Freigabe des ersten Taktsignals (clk1) und
- einen zweiten Synchronisator (334; 434) zur Freigabe des zweiten Taktsignals (clk0),
wobei die Synchronisatoren (332, 334; 432, 434) so konfiguriert sind, dass sie eines der Taktsignale (clk0, clk1) mit einer Latenzzeit freigeben, die mindestens so lang wie eine kleinste Periode beider Taktsignale (clk0, clk1) ist, und
wobei die Synchronisatoren (332, 334; 432, 434) über Rückkopplungsleitungen (342; 442) so miteinander verbunden sind, dass die Freigabe eines der Taktsignale (clk0, clk1) erst möglich ist, nachdem das andere der Taktsignale (clk0, clk1) gesperrt ist,
wobei die Multiplexereinheit (110; 310; 410) ferner so konfiguriert ist, dass sie das erste Taktsignal (clk1) sperrt und das zweite Taktsignal (clk0) auf der Grundlage eines ersten Reset-Signals (119; 319; 419) freigibt, das auf der Grundlage des Steuersignals (sel) und des ersten Taktsignals (clk1), das nicht umschaltet, bereitgestellt wird,
wobei die Multiplexereinheit (110; 310; 410) ferner so konfiguriert ist, dass sie das zweite Taktsignal (clk0) sperrt und das erste Taktsignal (clk1) auf der Grundlage eines zweiten Reset-Signals (123; 323; 423) freigibt, das auf der Grundlage des Steuersignals (sel) und des zweiten Taktsignals (clk0), das nicht umschaltet, bereitgestellt wird, und
wobei der störungsfreie Taktmultiplexer weiterhin umfasst:
- eine erste Reset-Einheit (418) zum Bereitstellen des ersten Reset-Signals (419) basierend auf dem Steuersignal (sel) und den Taktsignalen (clk0, clk1) und konfiguriert zum Überwachen eines Umschaltens des ersten Taktsignals (clk1), wobei die erste Reset-Einheit (418) zum Bereitstellen des ersten Reset-Signals (419) zum Sperren des ersten Taktsignals (clk1) und zum Freigeben des zweiten Taktsignals (clk0) konfiguriert ist, wenn das erste Taktsignal (clk1) nicht umschaltet und das zweite Taktsignal (clk0) ausgewählt ist, und
- eine zweite Reset-Einheit (422) zum Bereitstellen des zweiten Reset-Signals (423) auf der Grundlage des Steuersignals (sel) und der Taktsignale (clk0, clk1), und konfiguriert zum Überwachen eines Umschaltens des zweiten Taktsignals (clk0), wobei die zweite Reset-Einheit (422) so konfiguriert ist, dass sie das zweite Reset-Signal (423) zum Sperren des zweiten Taktsignals (clk0) und zum Freigeben des ersten Taktsignals (clk1) bereitstellt, wenn das zweite Taktsignal (clk0) nicht umschaltet und das erste Taktsignal (clk1) ausgewählt ist, und
wobei jede der Reset-Einheiten (418, 422) folgendes umfasst
- einen Zeitgeber (418, 422), der so konfiguriert ist, dass er auf der Grundlage des Taktsignals (clk1, clk0), das die Reset-Einheit (418, 422) überwacht, zurückgesetzt wird,
wobei der Zeitgeber (418, 422) so konfiguriert ist, dass er den Synchronisator (432, 434) des Taktsignals (clk1, clk0), das die Reset-Einheit (418, 422) überwacht, zurücksetzt, wenn das Taktsignal (clk1, clk0), das die Reset-Einheit (418, 422) überwacht, aufhört umzuschalten und mit einer Latenzzeit, die von einer Periode des anderen Taktsignals (clk0, clk1) abhängt.

2. Störungsfreier Taktmultiplexer (100; 300; 400) nach Anspruch 1, der eines oder mehrere der folgenden Elemente umfasst:
- einen Steuersignaleingang (106; 306; 406) zum Empfang des Steuersignals (sel),
- einen ersten Taktsignaleingang (102; 302; 402) zum Empfang des ersten Taktsignals (clk1),
- einen zweiten Taktsignaleingang (104; 304; 404) zum Empfang des zweiten Taktsignals (clk0),
- einen ersten Reset-Signaleingang (120; 320; 420) zum Empfangen des ersten Reset-Signals (119; 319; 419) und zum Sperren des ersten Taktsignals (clk1), und
- einen zweiten Reset-Signaleingang (124; 324; 424) zum Empfangen des zweiten Reset-Signals (123; 323; 423) und zum Sperren des zweiten Taktsignals (clk0).

3. Störungsfreier Taktmultiplexer (300; 400) nach Anspruch 1 oder 2, wobei die Multiplexereinheit (310; 410) umfasst
eine erste UND-Logik (336; 436) zur Bereitstellung eines ersten UND-Logik-Ausgangssignals (350; 450) auf der Grundlage des Steuersignals (sel) und eines invertierten zweiten Freigabetaktsignals, und
eine zweite UND-Logik (340; 440) zur Bereitstellung eines zweiten UND-Logik-Ausgangssignals (352; 452) auf der Grundlage eines invertierten ersten Freigabetaktsignals und eines invertierten Steuersignals, das durch Invertieren des Steuersignals (sel) erzeugt wird, und
wobei der erste Synchronisator (332; 432) so konfiguriert ist, dass er ein erstes Freigabetaktsignal (354; 454) auf der Grundlage des ersten UND-Logik-Ausgangssignals (350; 450), des ersten Taktsignals (clk1) und des ersten Reset-Signals (319; 419) bereitstellt,
wobei der erste Synchronisator (332; 432) so konfiguriert ist, dass er auf der Grundlage des ersten Reset-Signals (319; 419) zurückgesetzt wird,
wobei der zweite Synchronisator (334; 434) so konfiguriert ist, dass er ein zweites Freigabetaktsignal (356; 456) auf der Grundlage des zweiten UND-Logik-Ausgangssignals (352; 452), des zweiten Taktsignals (clk0) und des zweiten Reset-Signals (323; 423) bereitstellt, und
wobei der zweite Synchronisator (334; 434) so konfiguriert ist, dass er auf der Grundlage des zweiten Reset-Signals (323; 423) zurückgesetzt wird.

4. Störungsfreier Taktmultiplexer (300, 400) nach Anspruch 3, wobei die Multiplexereinheit (310; 410) folgendes umfasst
eine dritte UND-Logik (344; 444) zur Bereitstellung eines dritten UND-Logik-Ausgangssignals (370; 470) auf der Grundlage des ersten Taktsignals (clk1) und des ersten Freigabetaktsignals (354; 454),
eine vierte UND-Logik (346; 446) zur Bereitstellung eines vierten UND-Logik-Ausgangssignals (372; 472) auf der Grundlage des zweiten Taktsignals (clk0) und des zweiten Freigabetaktsignals (356; 456), und
eine ODER-Logik (348; 448) zur Bereitstellung des Ausgangstaktsignals (clko) auf der Grundlage des dritten UND-Logik-Ausgangssignals (370; 470) und des vierten UND-Logik-Ausgangssignals (372; 472).

5. Störungsfreier Taktmultiplexer (300; 400) nach mindestens einem der Ansprüche 1 bis 4, wobei mindestens einer der Synchronisatoren (332, 334; 432, 434) ein durch eine negative Flanke getriggertes D-Flipfllop (360, 366; 460, 466) und ein durch eine positive Flanke getriggertes D-Flipflop (358, 364; 458, 464) umfasst,
wobei flankengetriggerte Eingänge (NE, PE) der flankengetriggerten D-Flipflops (358, 360, 364, 366; 458, 460, 464, 466) für den Empfang eines jeweiligen Taktsignals (clk0, clk1) konfiguriert sind,
wobei die flankengetriggerten D-Flipflops (358, 360, 364, 366; 458, 460, 464, 466) in Reihe angeordnet sind, so dass ein Ausgangssignal (362, 368; 462, 468) eines der flankengetriggerten D-Flipflops (358, 364; 458, 464) einem Dateneingang (D) des anderen flankengetriggerten D-Flipflops (360, 366; 460, 466) zugeführt wird, und
wobei die flankengetriggerten D-Flipflops (358, 360, 364, 366; 458, 460, 464, 466) so konfiguriert sind, dass sie auf der Grundlage eines jeweiligen Reset-Signals (319, 323; 419, 423) zurückgesetzt werden.

6. Störungsfreier Taktmultiplexer (400) nach mindestens einem der Ansprüche 1 bis 5, wobei der Zeitgeber (418, 422) eine Reihe von flankengetriggerten D-Flip-Flops (428, 430, 480, 482) enthält,
wobei der Zeitgeber (418, 422) so konfiguriert ist, dass ein Dateneingang (D) eines ersten flankengetriggerten D-Flipflops (428, 480) in der Reihe mit einem auf dem Steuersignal (sel) basierenden Datensignal versorgt wird,
wobei die flankengetriggerten D-Flipflops (428, 430, 480, 482) so angeordnet sind, dass ein Ausgangssignal eines vorhergehenden flankengetriggerten D-Flipflops (428, 480) einem Dateneingang (D) eines nachfolgenden flankengetriggerten D-Flip-flops (430, 482) der Reihe flankengetriggerter D-Flipflops (428, 430, 480, 482) zugeführt wird,
wobei der Zeitgeber (418, 422) so konfiguriert ist, dass Reset-Eingänge (RST) der flankengetriggerten D-Flipflops (428, 430, 480, 482) mit dem Taktsignal (clk1, clk0) versorgt werden, das die Reset-Einheit (418, 422) überwacht, so dass die Reset-Einheit (418, 422) regelmäßig zurückgesetzt wird, während das Taktsignal (clk1, clk0) umschaltet, und
wobei der Zeitgeber (418, 422) so konfiguriert ist, dass flankengetriggerte Eingänge (PE) der flankengetriggerten D-Flipflops (428, 430, 480, 482) mit dem anderen Taktsignal (clk0, clk1) versorgt werden.

7. Störungsfreier Taktmultiplexer (400) nach mindestens einem der Ansprüche 1 bis 6, umfassend
eine erste Umschalt-Erkennungseinheit (476), die so konfiguriert ist, dass sie ein Umschalten des ersten Taktsignals (clk1) erkennt und ein inaktives erstes Taktsignal (iclk1) bereitstellt, wenn das erste Taktsignal (clk1) nicht umschaltet, und
eine zweite Umschalt-Erkennungseinheit (478), die so konfiguriert ist, dass sie ein Umschalten des zweiten Taktsignals (clk0) erkennt und ein inaktives zweites Taktsignal (iclk0) bereitstellt, wenn das zweite Taktsignal (clk0) nicht umschaltet.

8. Störungsfreier Taktmultiplexer (400) nach mindestens einem der Ansprüche 1 bis 7, wobei der störungsfreie Taktmultiplexer (400) so konfiguriert ist, dass der störungsfreie Taktmultiplexer (400) den störungsfreien Taktmultiplexer (400) zurücksetzt, wenn der störungsfreie Taktmultiplexer (400) aktiviert wird.

9. Integrierte Schaltung (1000) mit
- dem störungsfreien Taktmultiplexer (100) nach mindestens einem der Ansprüche 1 bis 8,
- eine Steuereinheit (116), die für die Bereitstellung des Steuersignals (sel) konfiguriert ist, und
- zwei Taktgebern (112, 114) zur Bereitstellung der beiden Taktsignale (clk0, clk1).

10. Verfahren (700) zum Bereitstellen eines Ausgangstaktsignals, das aus einem ersten Taktsignal und einem zweiten Taktsignal ausgewählt wird, mit den Schritten
- Bereitstellen des ersten Taktsignals und des zweiten Taktsignals (710),
- Bereitstellen eines Steuersignals (720),
- Überwachung eines Umschaltens des ersten Taktsignals (clk1) durch eine erste Reset-Einheit,
- Überwachung eines Umschaltens des zweiten Taktsignals (clk0) durch eine zweite Reset-Einheit,
- Bereitstellen eines ersten Reset-Signals durch die erste Reset-Einheit auf der Grundlage des zweiten Taktsignals, des Steuersignals und des nicht umschaltenden ersten Taktsignals (730), wobei das erste Reset-Signal durch die erste Reset-Einheit bereitgestellt wird, wenn das erste Taktsignal nicht umschaltet und das zweite Taktsignal ausgewählt ist,
- Bereitstellen eines zweiten Reset-Signals durch die zweite Reset-Einheit auf der Grundlage des ersten Taktsignals, des Steuersignals und des nicht umschaltenden zweiten Taktsignals (740), wobei das zweite Reset-Signal durch die zweite Reset-Einheit bereitgestellt wird, wenn das zweite Taktsignal nicht umschaltet und das erste Taktsignal ausgewählt ist,
- Sperren eines aktuellen Ausgangstaktsignals (750) vor dem Freigeben eines nächsten Ausgangstaktsignals auf der Grundlage des Steuersignals und der Taktsignale, so dass jeweils nur eines der Taktsignale zur Auswahl als Ausgangstaktsignal freigegeben wird (760),
- Freigeben des ersten Taktsignals durch einen ersten Synchronisator und Sperren des zweiten Taktsignals basierend auf dem zweiten Reset-Signal, wenn das zweite Taktsignal nicht umschaltet (750), oder Freigeben des zweiten Taktsignals durch einen zweiten Synchronisator und Sperren des ersten Taktsignals basierend auf dem ersten Reset-Signal, wenn das erste Taktsignal nicht umschaltet (750), jeweils mit einer Latenzzeit, die mindestens so lang ist wie eine kleinste Periode der beiden Taktsignale, durch Zurücksetzen eines Zeitgebers, der in jeder der Reset-Einheiten enthalten ist, auf der Grundlage des Taktsignals, das die Reset-Einheit überwacht, und durch Zurücksetzen des Synchronisators des Taktsignals, das die Reset-Einheit überwacht, durch den Zeitgeber, wenn das Taktsignal, das die Reset-Einheit überwacht, aufhört umzuschalten, und mit einer Latenzzeit, die von einer Periode des anderen Taktsignals abhängt,
wobei die Synchronisatoren über Rückkopplungsleitungen miteinander verbunden sind, so dass die Freigabe eines der Taktsignale nur möglich ist, nachdem das andere der Taktsignale gesperrt wurde, und
- Auswahl des Taktsignals, das als Ausgangstaktsignal freigegeben ist, so dass das Umschalten zwischen den Taktsignalen mit einer Latenzzeit erfolgt, die mindestens so lang ist wie eine kleinste Periode der beiden Taktsignale, um Störungen zu vermeiden (770).

11. Computerprogrammprodukt zum Bereitstellen eines Ausgangstaktsignals (clko), das aus zwei Taktsignalen (clk0, clk1) ausgewählt ist, wobei das Computerprogrammprodukt Programmcodemittel umfasst, um die integrierte Schaltung (1000) nach Anspruch 9 zu veranlassen, das in Anspruch 10 definierte Verfahren (700) auszuführen, wenn das Computerprogrammprodukt auf der integrierten Schaltung (1000) ausgeführt wird.

## Revendications

1. Multiplexeur d'horloge sans transitoires de commutation (100 ; 300 ; 400) pour fournir un signal d'horloge de sortie (clk0) sélectionné parmi un premier signal d'horloge (clk1) et un deuxième signal d'horloge (clk0), comprenant
- une unité formant multiplexeur (110 ; 310 ; 410) configurée pour désactiver un signal d'horloge de sortie actuel (clk0) avant d'activer un signal d'horloge de sortie suivant (clk1) sur la base d'un signal de commande (sel) et des signaux d'horloge (clk0, clk1), de sorte qu'un seul des signaux d'horloge (clk0, clk1) puisse être sélectionné comme signal d'horloge de sortie (clk0) à la fois,
dans lequel le multiplexeur d'horloge sans transitoires de commutation (100 ; 300 ; 400) est configuré pour sélectionner le signal d'horloge (clk1) qui est activé comme signal d'horloge de sortie (clk0), de telle sorte qu'une commutation entre les signaux d'horloge (clk0, clk1) est effectuée avec une latence qui est au moins aussi longue qu'une plus petite période des deux signaux d'horloge (clk0, clk1) afin d'éviter des transitoires de commutation,
dans lequel l'unité formant multiplexeur (310 ; 410) comprend
- un premier synchroniseur (332 ; 432) pour activer le premier signal d'horloge (clk11) et
- un deuxième synchroniseur (334 ; 434) pour activer le deuxième signal d'horloge (clk0),
dans lequel les synchroniseurs (332, 334 ; 432, 434) sont configurés pour activer l'un des signaux d'horloge (clk0, clk1) avec une latence qui est au moins aussi longue qu'une plus petite période des deux signaux d'horloge (clk0, clk1), et
dans lequel les synchroniseurs (332, 334 ; 432, 434) sont connectés les uns aux autres via des lignes de rétroaction (342 ; 442) de telle sorte que l'activation de l'un des signaux d'horloge (clk0, clk1) n'est possible qu'après l'autre des signaux d'horloge (clk0, clk1) est désactivé,
dans lequel l'unité formant multiplexeur (110 ; 310 ; 410) est en outre configurée pour désactiver le premier signal d'horloge (clk1) et pour activer le deuxième signal d'horloge (clk0) sur la base d'un premier signal de réinitialisation (119 ; 319 ; 419) fourni dans le cas où le signal de commande (sel) et le premier signal d'horloge (clk1) ne basculent pas,
dans lequel l'unité formant multiplexeur (110 ; 310 ; 410) est en outre configurée pour désactiver le deuxième signal d'horloge (clk0) et pour activer le premier signal d'horloge (clk1) sur la base d'un deuxième signal de réinitialisation (123 ; 323 ; 423) fourni dans le cas où le signal de commande (sel) et le deuxième signal d'horloge (clk0) ne basculent pas, et
dans lequel le multiplexeur d'horloge sans transitoires de commutation comprend en outre :
- une première unité de réinitialisation (418) pour fournir le premier signal de réinitialisation (419) sur la base du signal de commande (sel) et des signaux d'horloge (clk0, clk1) et configurée pour surveiller un basculement du premier signal d'horloge (clk1), dans lequel la première unité de réinitialisation (418) est configurée pour fournir le premier signal de réinitialisation (419) pour désactiver le premier signal d'horloge (clk1) et pour activer le deuxième signal d'horloge (clk0) lorsque le premier signal d'horloge (clk1) ne bascule pas et que le deuxième le signal d'horloge (clk0) est sélectionné, et
- une deuxième unité de réinitialisation (422) pour fournir le deuxième signal de réinitialisation (423) sur la base du signal de commande (sel) et des signaux d'horloge (clk0, clk1), et configurée pour surveiller un basculement du deuxième signal d'horloge (clk0), dans lequel la deuxième unité de réinitialisation (422) est configurée pour fournir le deuxième signal de réinitialisation (423) pour désactiver le deuxième signal d'horloge (clk0) et pour activer le premier signal d'horloge (clk1) lorsque le deuxième signal d'horloge (clk0) ne bascule pas et que le premier signal d'horloge (clk1) est sélectionné, et
dans lequel chacune des unités de réinitialisation (418, 422) comprend
- un temporisateur (418, 422) qui est configurée pour être réinitialisée sur la base du signal d'horloge (clk1, clk0) que l'unité de réinitialisation (418, 422) surveille,
dans lequel le temporisateur (418, 422) est configuré pour réinitialiser le synchroniseur (432, 434) du signal d'horloge (clk1, clk0) que l'unité de réinitialisation (418, 422) surveille lorsque le signal d'horloge (clk1, clk0) qui l'unité de réinitialisation (418, 422) surveille s'arrête de basculer et avec une latence dépendant d'une période de l'autre signal d'horloge (clk0, clk1).

2. Multiplexeur d'horloge sans transitoires de commutation (100 ; 300 ; 400) selon la revendication 1, comprenant un ou plusieurs des éléments suivants :
- une entrée de signal de commande (106 ; 306 ; 406) pour recevoir le signal de commande (sel),
- une première entrée de signal d'horloge (102 ; 302 ; 402) pour recevoir le premier signal d'horloge (clk1),
- une deuxième entrée de signal d'horloge (104 ; 304 ; 404) pour recevoir le deuxième signal d'horloge (clk0),
- une première entrée de signal de réinitialisation (120 ; 320 ; 420) pour recevoir le premier signal de réinitialisation (119 ; 319 ; 419) et pour désactiver le premier signal d'horloge (clk1), et
- une deuxième entrée de signal de réinitialisation (124 ; 324 ; 424) pour recevoir le deuxième signal de réinitialisation (123 ; 323 ; 423) et pour désactiver le deuxième signal d'horloge (clk0).

3. Multiplexeur d'horloge sans transitoires de commutation (300 ; 400) selon la revendication 1 ou 2, dans lequel l'unité formant multiplexeur (310 ; 410) comprend :
- une première logique ET (336 ; 436) pour fournir un premier signal de sortie ET logique (350 ; 450) sur la base du signal de commande (sel) et d'un deuxième signal d'horloge d'activation inversé, et
- une deuxième logique ET (340 ; 440) pour fournir un deuxième signal de sortie ET logique (352 ; 452) sur la base d'un premier signal d'horloge d'activation inversé et d'un signal de commande inversé généré en inversant le signal de commande (sel), et
dans lequel le premier synchroniseur (332 ; 432) est configuré pour fournir un premier signal d'horloge d'activation (354 ; 454) sur la base du premier signal de sortie ET logique (350 ; 450), du premier signal d'horloge (clk1) et du premier signal de réinitialisation (319 ; 419),
dans lequel le premier synchroniseur (332 ; 432) est configuré pour être réinitialisé sur la base du premier signal de réinitialisation (319 ; 419),
dans lequel le deuxième synchroniseur (334 ; 434) est configuré pour fournir un deuxième signal d'horloge d'activation (356 ; 456) sur la base du deuxième signal de sortie ET logique (352 ; 452), du deuxième signal d'horloge (clk0) et du deuxième signal de réinitialisation (323 ; 423), et
dans lequel le deuxième synchroniseur (334 ; 434) est configuré pour être réinitialisé sur la base du deuxième signal de réinitialisation (323 ; 423).

4. Multiplexeur d'horloge sans transitoires de commutation (300, 400) selon la revendication 3, dans lequel l'unité formant multiplexeur (310 ; 410) comprend :
- une troisième logique ET (344 ; 444) pour fournir un troisième signal de sortie ET logique (370 ; 470) sur la base du premier signal d'horloge (clk1) et du premier signal d'horloge d'activation (354 ; 454), une quatrième ET logique ET (346 ; 446) pour fournir un quatrième signal de sortie ET logique (372 ; 472) sur la base du deuxième signal d'horloge (clk0) et du deuxième signal d'horloge d'activation (356 ; 456), et
- une logique OU (348 ; 448) pour fournir le signal d'horloge de sortie (clk0) sur la base du troisième signal de sortie ET logique (370 ; 470) et du quatrième signal de sortie ET logique (372 ; 472).

5. Multiplexeur d'horloge sans transitoires de commutation (300 ; 400) selon au moins l'une des revendications 1 à 4, dans lequel au moins l'un des synchroniseurs (332, 334 ; 432, 434) comprend une bascule D déclenchée par un front négatif (360, 366 ; 460, 466) et une bascule D déclenchée par un front positif (358, 364 ; 458, 464),
dans lequel les entrées déclenchées par front (NE, PE) des bascules D déclenchées par front (358, 360, 364, 366 ; 458, 460, 464, 466) sont configurées pour recevoir un signal d'horloge respectif (clk0, clk1),
dans lequel les bascules D déclenchées par front (358, 360, 364, 366 ; 458, 460, 464, 466) sont disposées en série de telle sorte qu'un signal de sortie (362, 368 ; 462, 468) de l'une des bascules D déclenchées par front (358, 364 ; 458, 464) soit fourni à une entrée de données (D) de l'autre bascule D déclenchée par front (360, 366 ; 460, 466), et
dans lequel les bascules D déclenchées par front (358, 360, 364, 366 ; 458, 460, 464, 466) sont configurées pour être réinitialisées sur la base d'un signal de réinitialisation respectif (319, 323 ; 41 9, 423).

6. Multiplexeur d'horloge sans transitoires de commutation (400) selon au moins l'une des revendications 1 à 5, dans lequel le temporisateur (418, 422) comprend une série de bascules D déclenchées par front (428, 430, 480, 482), ,
dans lequel le temporisateur (418, 422) est configuré de telle sorte qu'une entrée de données (D) d'une première bascule D déclenchée par front (428, 480) dans la série reçoit un signal de données basé sur le signal de commande (sel),
dans lequel les bascules D déclenchées par front (428, 430, 480, 482) sont agencées de telle sorte qu'un signal de sortie d'une bascule D déclenchée par front précédente (428, 480) soit fourni à une entrée de données (D) d'une bascule D déclenchée par front subséquente (430, 482) de la série de bascules D déclenchées par front (428, 430, 480, 482),
dans lequel le temporisateur (418, 422) est configuré de telle sorte que les entrées de réinitialisation (RST) des bascules D déclenchées par front (428, 430, 480, 482) reçoivent le signal d'horloge (clk1, clk0) que l'unité de réinitialisation (418, 422) surveille, de telle sorte que l'unité de réinitialisation (418, 422) soit régulièrement réinitialisée pendant que le signal d'horloge (clk1, clk0) bascule, et
dans lequel le temporisateur (418, 422) est configuré de telle sorte que les entrées déclenchées par front (PE) des bascules D déclenchées par front (428, 430, 480, 482) reçoivent l'autre signal d'horloge (clk0, clk1).

7. Multiplexeur d'horloge sans transitoires de commutation (400) selon au moins l'une des revendications 1 à 6, comprenant :
- une première unité de détection de basculement (476) configurée pour détecter un basculement du premier signal d'horloge (clk1) et pour fournir un premier signal d'horloge inactif (iclk1) si le premier signal d'horloge (clk1) ne bascule pas, et
- une deuxième unité de détection de basculement (478) configurée pour détecter un basculement du deuxième signal d'horloge (clk0) et pour fournir un deuxième signal d'horloge inactif (iclk0) si le deuxième signal d'horloge (clk0) ne bascule pas.

8. Multiplexeur d'horloge sans transitoires de commutation (400) selon au moins l'une des revendications 1 à 7, dans lequel le multiplexeur d'horloge sans transitoires de commutation (400) est configuré pour réinitialiser le multiplexeur d'horloge sans transitoires de commutation (400) lorsque le multiplexeur d'horloge sans transitoires de commutation (400) est activé.

9. Circuit intégré (1000) comprenant
- le multiplexeur d'horloge sans transitoires de commutation (100) selon au moins l'une des revendications 1 à 8,
- une unité de commande (116) configurée pour fournir le signal de commande (sel), et
- deux horloges (112, 114) pour fournir les deux signaux d'horloge (clk0, clk1).

10. Procédé (700) pour fournir un signal d'horloge de sortie sélectionné parmi un premier signal d'horloge et un deuxième signal d'horloge, comprenant les étapes consistant à :
- fournir le premier signal d'horloge et le deuxième signal d'horloge (710),
- fournir un signal de commande (720),
- surveiller un basculement du premier signal d'horloge (clk1) par une première unité de réinitialisation,
- surveiller un basculement du deuxième signal d'horloge (clk0) par une deuxième unité de réinitialisation,
- fournir un premier signal de réinitialisation par la première unité de réinitialisation sur la base du fait que le deuxième signal d'horloge, le signal de commande et le premier signal d'horloge ne basculent pas (730), le premier signal de réinitialisation étant fourni par la première unité de réinitialisation lorsque le premier signal d'horloge ne bascule pas et le deuxième signal d'horloge est sélectionné,
- fournir un deuxième signal de réinitialisation par la deuxième unité de réinitialisation sur la base du fait que le premier signal d'horloge, le signal de commande et le deuxième signal d'horloge ne basculent pas (740), le deuxième signal de réinitialisation étant fourni par la deuxième unité de réinitialisation lorsque le deuxième signal d'horloge ne bascule pas et le premier signal d'horloge est sélectionné,
- désactiver un signal d'horloge de sortie actuel (750) avant d'activer un signal d'horloge de sortie suivant sur la base du signal de commande et des signaux d'horloge, de sorte qu'un seul des signaux d'horloge puisse être sélectionné comme signal d'horloge de sortie à la fois (760),
- activer le premier signal d'horloge par un premier synchroniseur et désactiver le deuxième signal d'horloge sur la base du deuxième signal de réinitialisation lorsque le deuxième signal d'horloge ne bascule pas (750) ou activer le deuxième signal d'horloge par un deuxième synchroniseur et désactiver le premier signal d'horloge sur la base du premier signal de réinitialisation lorsque le premier signal d'horloge ne bascule pas (750), chacun avec une latence qui est au moins aussi longue qu'une plus petite période des deux signaux d'horloge en réinitialisant un temporisateur inclus dans chacune des unités de réinitialisation sur la base de le signal d'horloge que l'unité de réinitialisation surveille et en réinitialisant le synchroniseur du signal d'horloge que l'unité de réinitialisation surveille par le temporisateur lorsque le signal d'horloge que l'unité de réinitialisation surveille cesse de basculer et avec une latence dépendant d'une période de l'autre signal d'horloge,
dans lequel les synchroniseurs sont connectés les uns aux autres via des lignes de rétroaction de telle sorte que l'activation de l'un des signaux d'horloge n'est possible qu'après que l'autre des signaux d'horloge est désactivé, et
- sélectionner le signal d'horloge qui est activé comme signal d'horloge de sortie, de sorte que la commutation entre les signaux d'horloge soit effectuée avec une latence qui est au moins aussi longue qu'une plus petite période des deux signaux d'horloge afin d'éviter des transitoires de commutation (770).

11. Produit formant programme informatique pour fournir un signal d'horloge de sortie (clk0) sélectionné parmi deux signaux d'horloge (clk0, clk1), dans lequel le produit formant programme informatique comprend des moyens de code de programme pour amener le circuit intégré (1000) selon la revendication 9 à exécuter le procédé (700) tel que défini dans la revendication 10, lorsque le produit formant programme informatique est exécuté sur le circuit intégré (1000).
